# EUROPÄISCHE PATENTSCHRIFT

(11) **EP 0 671 355 B1**
(45) Veröffentlichungstag und Bekanntmachung des Hinweises auf die Patenterteilung: **06.05.1999**
(21) Anmeldenummer: 95102367.0
(22) Anmeldetag: 21.02.1995
(51) Int. Cl.: D01G 15/62, B65H 54/80, B65H 54/74

(54) **Bandablage**
Sliver stacking
Stockage de ruban de fibres

(30) Priorität: 09.03.1994 CH 691/94
(43) Veröffentlichungstag der Anmeldung: 13.09.1995
(73) Patentinhaber: MASCHINENFABRIK RIETER AG, CH-8406 Winterthur (CH)
(72) Erfinder: Faas, Jürg, CH-8474 Dinhard (CH)

(56) Entgegenhaltungen:
- EP-A- 0 312 774
- WO-A-92/04266
- DD-A- 224 626
- DE-A- 2 130 666
- FR-A- 2 596 422
- TEXTIL PRAXIS INTERNATIONAL, Januar 1992, LEINFELDEN DE, Seiten 37-38, XP002007813 DIPL.-ING. HANS-MARTIN BAUM: "Drehstrommotoren mit Frequenzumrichtern für Textilmaschinen"

## Beschreibung

Die Erfindung bezieht sich auf eine faserbandliefernde Maschine und eine dieser Maschine zugeordnete Bandablage (Kannenpresse, Kannenstock), wobei die Maschine mit einem Antrieb für die bandliefernden Elemente und die Bandablage mit einem eigenen Antrieb versehen sind. Die Maschine ist insbesondere eine Karde.

Solche Anordnungen sind z.B aus DE-C-3734425 und WO 92/04266 bekannt. Die Vorteile des eigenen Antriebes für die Bandablage (sogenannte "autonome Bandablage") sind in DE-C-3734425 aufgeführt. Der Antrieb für die Bandablage wird normalerweise anhand eines Signals von einem Sensor gesteuert, das die Bandlieferung zwischen dem Kardenauslauf und der Bandablage abtastet. Mittels dieses Signals wird ein für den Antrieb der Bandablage eigens vorgesehenes Regelgerät gesteuert. Andere Produkte (z.B. die Trützschler DK760 Karde) umfassen sogenannte Servoachsen, die von einem integrierten Steuergerät gesteuert werden, wobei jede Achse separat angesteuert wird. Solche Servoachsen sind in US-4530134 gezeigt, allerdings ohne Bandablage (Kannenpresse). Die bekannten Vorrichtungen arbeiten einwandfrei, sind aber aufwendig, entweder weil sie zusätzliche Elemente erfordern oder weil die Elemente teuer sind oder beides.

Ein modernes Antriebssystem für eine Textilmaschine beruht auf der Frequenzumformertechnik - siehe zum Beispiel "Drehstrommotoren mit Frequenzumrichtern für Textilmaschinen" (Textil Praxis International 1992, Januar, Seite 37,38). Ein solcher Antrieb für die Karde ist zum Beispiel in DD-A-224626 gezeigt, wobei in dem Fall mehrere Umrichter (Einzelumrichter) verwendet werden. Ueberraschenderweise stellt es sich nun heraus, dass solche Antriebssysteme erweitert werden können, um die Bandablage miteinzubeziehen. Dies ist deshalb überraschend, weil feststeht, dass in der Bandstrecke zwischen der Maschine und der Bandablage Fehlverzüge besonders leicht erzeugt werden können, und angenommen wird, dass Fehlverzüge ohne Sondermassnahmen im Antriebssystem nicht zu vermeiden sind.

Gemäss dieser Erfindung umfasst sowohl der Antrieb für die bandliefernden Elemente der Maschine, wie auch der Antrieb für die Bandablage, mindestens je einen frequenzgesteuerten Drehstrommotor, und es ist zum Speisen dieser Motoren ein gemeinsamer Frequenzumrichter oder ein Frequenzumrichterpaar vorgesehen, wobei die Umrichter eines Paares miteinander gekoppelt sind, um die gleiche Ausgangsfrequenz bzw. Ausgangsfrequenzen in einem vorgebbaren Verhältnis vorzuweisen. Die Drehstrommotoren sind vorzugsweise Asynchronmotoren, d.h. Motoren, die wegen Schlupf eine lastabhängige Drehzahlcharakteristik bei konstanter Speisefrequenz aufweisen. Eine solche Charakteristik ist (trotz des Risikos eines Fehlverzuges) deshalb verwendbar, weil es sich herausstellt, dass die zu erwartenden Laständerungen im Betrieb derart ähnliche Verhaltensweisen an den massgebenden Stellen aufweisen, dass die Differenz der relativen Drehzahlfehler (d.h. der Drehzahlunterschied gegenüber den Synchrondrehzahlen) in der Praxis innerhalb sehr engen Grenzen (akzeptablen Toleranzen) bleibt.

Die Erfindung sieht dementsprechend ein Antriebssystem für eine faserbandherstellende Textilmaschine vor, das dadurch gekennzeichnet ist, dass sowohl der Antrieb für bandliefernden Elemente der Maschine, wie auch der Antrieb für die Bandablage mindestens je einen frequenzgesteuerten Drehstrommotor umfassen, und zum Speisen dieser Motoren ein gemeinsamer Frequenzumrichter vorgesehen ist. Vorteilhaft werden die bandliefernden Elemente, wie auch die Bandablage durch Motoren angetrieben werden, die eine lastabhängige Drehzahlcharakteristik aufweisen. Das Antriebssystem umfasst vorzugsweise eine Motorensteuerung, die derart ausgelegt ist, dass allfälliger, im Betrieb entstehender Motorenschlupf innerhalb vorgebbarer Grenzen bleibt. Die Steuerung weist vorzugsweise einen steuerbaren Leistungsteil auf, welcher die genannten Motoren speist. Der Leistungsteil ist vorzugsweise bezüglich der Frequenz der dadurch gelieferten elektrischen Energie steuerbar; er umfasst zum Beispiel mindestens einen Frequenzumrichter, und die genannten Motoren sind dann über die Speisefrequenz steuerbare Motoren.

Aus Kostengründen wird man normalerweise Drehstromasynchronmotoren (Kurzschlussläufermotoren) wählen, wobei die Verwendung von anderen, über die Speisefrequenz steuerbaren Motoren (z.B Reluktanz- oder sogar Synchronmotoren) nicht ausgeschlossen ist. Der bevorzugte Motorentyp ist der sogenannte Getriebemotor. Die effektive Drehzahl eines solchen Motors wird sowohl durch die Speisefrequenz wie auch durch die Ueber- bzw. Untersetzung des dem Motor zugeordneten Getriebes beeinflusst. Das Getriebe kann Wechselstellen umfassen, so dass die effektive Drehzahl bei gegebener Speisefrequenz eingestellt werden kann. Das Gesamtsystem ist aber vorzugsweise derart angeordnet, dass keine Wechselstellen erforderlich sind.

Der Antrieb für die Bandablage kann mehrere Motoren umfassen, zum Beispiel einen ersten Motor für die Bandeinzugswalzen und das Trichterrad sowie einen zweiten Motor für den Drehteller. Es kann aber in der Bandablage nur ein einziger Motor vorgesehen werden (vgl. DE-C-3734425), wobei dann eine mechanische Uebertragung der Motorenleistung zwischen Ober- und Unterteil der Bandablage erforderlich wird.

Die Erfindung ist von besonderer Bedeutung in der Karde, weil die akzeptablen Toleranzen für Fehlverzüge im Zwischenprodukt dieser Maschine breiter sind, als sie zum Beispiel in Zusammenhang mit einer geregelten Strecke der zweiten Passage sind. Die Erfindung ist deshalb zur Verwendung in der Regulierstrecke nicht vorgesehen.

In der Karde sind gegenwärtig mit Liefergeschwindigkeiten zwischen 10 M/min und 300 M/min zu rechnen. Der Faserbandtiter liegt normalerweise im Bereich 3,5 bis 6,5 ktex. Die Antriebsmotoren der bandliefernden Elemente der Karde (des Auslaufes) weisen Drehzahlen zwischen 150 und 4500 U/min bei Speisefrequenzen zwischen 5 und 150 Hertz auf. Die erforderliche Ausgangsleistung eines Frequenzumrichters, um sowohl den Kardenauslauf wie auch die Bandablage mit Energie zu versorgen, liegt im Bereich von 1,5 bis 3 kWatt.

Beispiele der Erfindung werden nun anhand der in den Figuren der Zeichnungen dargestellten Ausführungen näher erklärt. Es zeigt:
- Fig. 1: eine schematische Seitenansicht einer Kardeneinheit, bestehend aus einer Materialzufuhrvorrichtung, der Karde selbst und einer der Karde zugeordneten Bandablage,
- Fig. 2: eine schematische Seitenansicht der Arbeitswalzen im Kardenauslauf,
- Fig. 3: eine schematische Ansicht der bandbildenden Elemente im Auslauf,
- Fig. 4: eine schematische isometrische Darstellung der Bandablage,
- Fig. 5: eine schematische Darstellung der wesentlichen Arbeitselemente der Bandablage,
- Fig. 6: eine schematische Darstellung einer ersten Variante nach dieser Erfindung,
- Fig. 6A: ein Detail aus Fig. 6, und
- Fig. 7: eine zweite Variante nach der Erfindung.

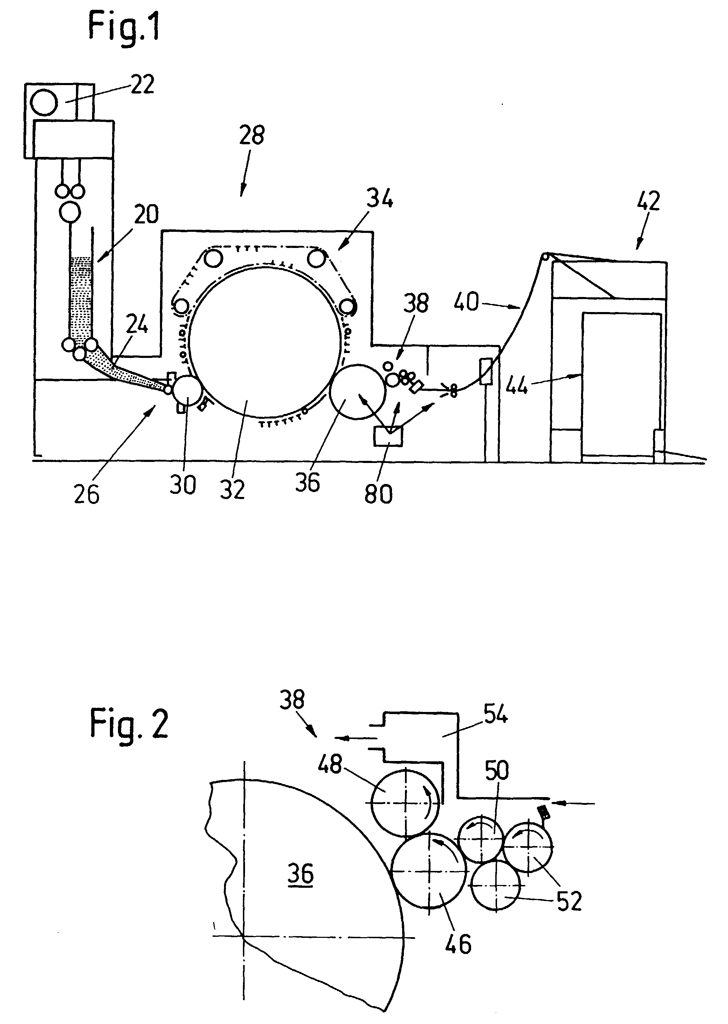

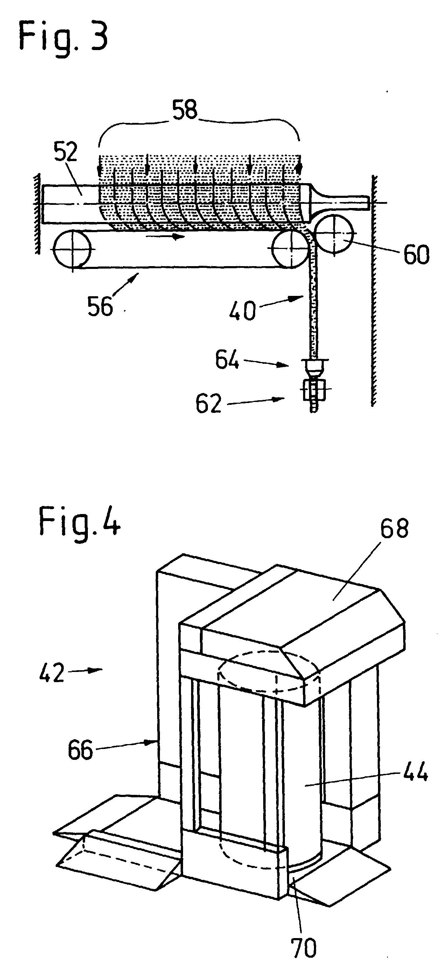

Die in Figur 1 dargestellte Kardeneinheit umfasst einen Füllschacht 20, der Fasermaterial aus einem schematisch angedeuteten Flockentransportsystem 22 erhält und daraus eine Watte 24 bildet, welche an die Speisevorrichtung 26 der Karde 28 weitergeleitet wird. Die Karde selbst ist konventioneller Bauart mit einem Briseur 30, Tambour 32, Wanderdeckelgerät 34 und Abnehmer 36, der Teil des Auslaufes 38 bildet. Der Auslauf wird nachfolgend anhand der Figuren 2 und 3 näher erklärt. Im Kardenauslauf wird ein Faserband 40 gebildet, das an die Bandablage (Kannenpresse bzw. den Kannenstock) 42 geliefert wird, wo das Band in Windungen in einer Kanne 44 abgelegt wird.

Der Auslauf nach Fig. 2 umfasst zusammen mit dem Abnehmer 36 eine Abnahmewalze 46, Putzwalze 48, Uebertragungswalze 50 und ein Klemmwalzenpaar 52. Das Bezugszeichen 54 weist auf eine Absaugung, die aber in Zusammenhang mit dieser Erfindung keine Rolle spielt und nicht weiter beschrieben wird. Eine wesentliche Vereinfachung der dargestellten Anordnung ist in der DE-U-94 20 756 beschrieben worden.

Eine Klemmwalze 52 ist nochmals in Fig. 3 von oben gezeigt, und zwar in Zusammenhang mit einem sogenannten Querband 56, wodurch das vom Klemmwalzenpaar gelieferte Faservlies 58 seitlich abgelenkt und mittels einer Umlenkwalze 60 zu einem Faserband 40 (siehe auch Fig. 1) zusammengefasst wird (z.B. nach EP-A-549534). Das Faserband 40 wird mittels eines Stufenwalzenpaares 62 durch einen Trichter 64 abgezogen und mit einer vorgegebenen Geschwindigkeit aus der Karde (Maschine) 28 geliefert. Eine dazu geeignete Stufenwalzenpaareinheit ist in EP-A-370232 gezeigt.

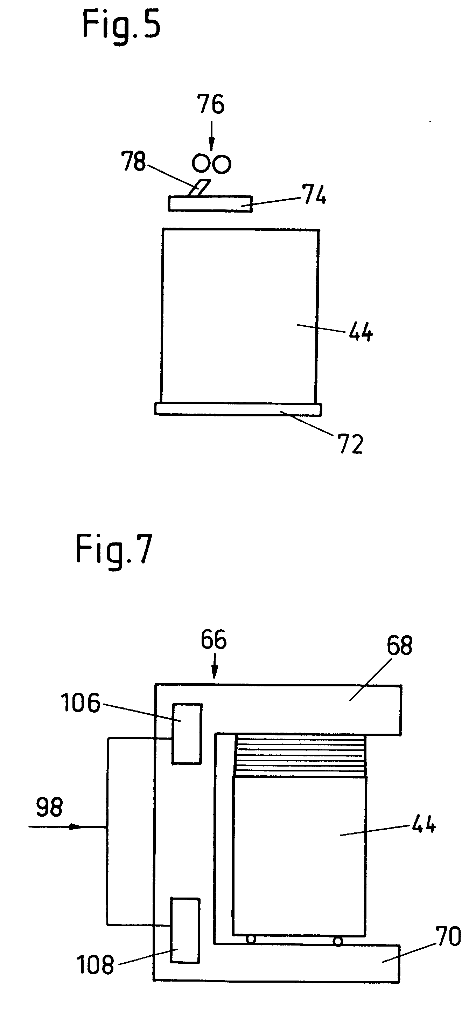

Die Bandablage 42 ist eine autonome Maschine mit eigenem Antrieb (wie nachfolgend näher erklärt) und kann frei gegenüber der Karde 28 aufgestellt werden. Sie umfasst ein Gestell 66 (Fig. 4) mit einer Kopfpartie 68, einer Fusspartie 70 und einer dazwischen liegenden Kannenaufnahmestation (kein Bezugszeichen). Die wesentlichen Arbeitselemente der Bandablage sind in Fig. 5 schematisch dargestellt und bestehen aus
- einem Drehteller 72 in der Fusspartie 70,
- einem Trichterrad 74 in der Kopfpartie 68, und
- einem Einzugswalzenpaar 76 oberhalb (oder unterhalb) des Trichterrades 74.
Die Kanne 44 wird auf den Drehteller 72 gestellt und gegen Rotation gegenüber dem Teller 72 befestigt (nicht gezeigt). Der Drehteller 72 wird vom nachfolgend beschriebenen Bandablagenantrieb um eine senkrechte Achse gedreht, wobei die Kanne 44 mitgenommen wird. Das Trichterrad 74 wird vom Bandablagenantrieb unabhängig vom Drehteller um eine zweite senkrechte Achse gedreht (z.B. nach EP-A-394773), wodurch das Faserband 40 über einen Führungskanal 78 in die Kanne 44 eingeführt und darin in Windungen vorgegebener Form abgelegt wird. Das Band wird durch die Walzen des Einzugswalzenpaares 76 in den Führungskanal 78 eingeführt, wobei jede Walze des Einzugswalzenpaares um die eigene waagrechte Längsachse vom Bandablagenantrieb gedreht wird.

Eine Ausführung eines Antriebes für die Karde selbst ist z.B. in dem deutschen Gebrauchsmuster 9312638 beschrieben. Der Antrieb umfasst einen Hauptantriebsmotor (nicht gezeigt) für den Tambour 32 (Fig. 1) und das Wanderdeckelgerät 34. Der Hauptantriebsmotor kann zum Beispiel nach EP-A-557242 ausgeführt werden. Es sind zusätzlich ein Antriebsmotor 80 für den Abnehmer 36 und die anderen Arbeitselemente des Auslaufes 38 bis und mit dem Stufenwalzenpaar 62 (Fig. 3) vorgesehen, was in Fig. 1 schematisch durch die vom Antrieb 80 ausgehenden Pfeile angedeutet wird.

Bezüglich des Antriebs für die Bandablage 42 kann von einem Antrieb nach DE-C-3734425 ausgegangen werden. Demnach umfasst der Bandablagenantrieb entweder einen Drehstrommotor oder allenfalls zwei Drehstrommotoren, der (bzw. davon jeder) mittels eines der Bandablage eigens zugeordneten Frequenzumrichters gesteuert wird. Die Ausgangsfrequenz des Umrichters wird grundsätzlich anhand eines von Faserbandlieferwalzen erzeugten Signals festgelegt. Die Bandlieferwalzen nach DE-C-3734425 entsprechen den Stufenwalzen 62 (Fig. 3). Es wird aber nach DE-C-3734425 zusätzlich ein Signal von einem die Spannung einer Faserbandschlaufe abtastenden Sensors zur Feineinstellung herangezogen, um einen Regelkreis zu bilden. Die Bandablage ist gegenüber der Textilmaschine (die in der DE-Patentschrift nicht gezeigt ist) praktisch "vollautonom", da es möglich ist, von den Bandlieferwalzen ein Signal zu gewinnen, ohne in die Steuerung der Maschine selbst eingreifen zu müssen. Dafür aber ist es notwendig, in der Bandablage Elemente vorzusehen, die eigentlich in der Maschine schon vorhanden sein müssen, wobei die notwendigen Steuersignale für die Bandablage eigentlich auch in der Maschine selbst schon "vorhanden" sind.

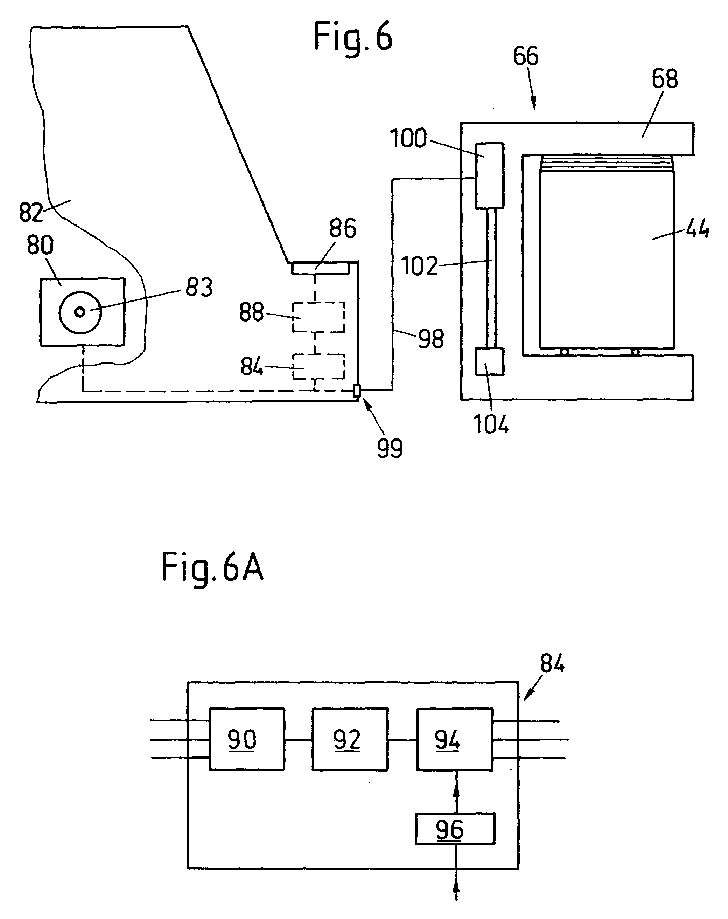

Fig. 6 zeigt nun schematisch eine erste Variante nach dieser Erfindung, wobei das Bezugszeichen 82 auf die Verschalung der Auslaufpartie der Karde deutet und auf den Antrieb für den Auslauf nochmals mit dem Bezugszeichen 80 hingewiesen wird. In einer kostengünstigen Ausführung umfasst dieser Antrieb 80 einen stufenlos steuerbaren, wartungsfreien Asynchronmotor 83 (z.B. einen Kurzschlussläufermotor), der mittels eines Frequenzumrichters 84 mit elektrischen Energie gespeist wird. Die Ausgangsfrequenz des Umrichters 84 ist über ein Eingabegerät 86 einstellbar, das in einer programmierbaren Steuerungseinheit 88 der Karde integriert ist. Eine solche Anordnung ist heutzutage allgemeiner Stand der Technik für die Karde, d.h. die Elemente 80,83,84,86 und 88 (oder ihre Aequivalente) sind für eine moderne Karde nahezu unerlässlich.

Der Frequenzumrichter 84 umfasst normalerweise einen Gleichrichter 90 (Fig. 6A), der Wechselstrom von einem 3-Phasen Netz erhält und Gleichstrom an einen Zwischenkreis 92 liefert. Ein steuerbarer Leistungsteil 94 wandelt Gleichstrom aus dem Zwischenkreis 92 in Wechselstrom mit einer Frequenz, die von einer Umrichtersteuerung anhand eines Signals von der Einheit 88 bestimmt wird. Dieses Wechselstrom (einphasig oder dreiphasig) wird dem Motor 83 gespeist.

Die Synchrondrehzahl des Motors 83 wird eindeutig durch die Ausgangsfrequenz des Frequenzumrichters 84 vorgegeben. Die effektive Drehzahl der Motorwelle wird aber nicht allein in Abhängigkeit von dieser Synchrondrehzahl bestimmt. Diese Drehzahl hängt auch von der Last ab, welcher der Motor unterworfen ist, das heisst im Motor 83 entsteht zwischen dem Rotor und dem Stator ein sogenannter "Schlupf". Diese Tatsache allein würde zu gar keinem Problem führen, wenn der Schlupf voraussehbar wäre. In der Praxis ändert sie sich aber kontinuierlich als eine Funktion der momentanen Lastverhältnissen, die nicht genau vorhersehbar sind.

Nach den vorbekannten Systemen sind dementsprechend Sondermassnahmen der einen oder der anderen Art ergriffen worden, um den sich ständig ändernden Verhältnissen Rechnung zu tragen, was Aufwand und Kosten verursacht hat.

Obwohl der Schlupf nicht kontrollierbar ist, kann das "Schlupfverhalten" (d.h. der Verlauf der Aenderungen des Schlupfes in Abhängigkeit von Laständerungen) sowohl in der Richtung wie auch in der Grössenordnung geschätzt werden. Im wesentlichen handelt es sich in der Auslaufpartie um Reibungsverluste und Verdichtungsarbeit, zum Beispiel wenn das Faserband durch den Trichter 64 (Fig. 3) gezogen wird. Solche Lastkomponenten sind abhängig vom Bandtiter und Liefergeschwindigkeit. Ueber einen Liefergeschwindigkeitsbereich bis 300 m/min kann man Asynchronmotoren wählen, die unter diesen Umständen einen Schlupf von maximal 3% aufweisen.

Der Frequenzumrichter 84 wird normalerweise derart ausgelegt werden, dass er imstande ist, die Bandablage auch mit der nötigen Energie zu versorgen, dies weil die Karde zum Antreiben einer mit ihr mechanisch gekoppelten Bandablage konstruiert werden muss. Es besteht kein Problem daher, die für eine "autonome" Bandablage erforderliche Energie über zum Beispiel eine Steckdose 99 der Kardenverschalung 82 vom Ausgang des Umrichters abzuzweigen und über einen Kabel 98 an einen Antriebsmotor 100 der Bandablage zu speisen. Der Motor 100 ist ein einfacher Drehstromgetriebemotor, der ähnlich dem Motor 83 direkt anhand der vom Frequenzumrichter erhaltenen Energie gesteuert wird.

In der Variante nach Fig. 6 entspricht die Anordnung insofern der Bandablage nach DE-C-3734425 als der Motor 100 die Arbeitselemente der Kopfpartie direkt und die Arbeitselemente der Fusspartie indirekt über einen Abtrieb 102 und ein Uebertragungsmittel 104 treibt. In dieser Variante ist das Schlupfverhalten des Motors 100 dem entsprechenden Verhalten des Motors 83 gleich, da es durch die gleichen Betriebsparameter bestimmt wird. Das heisst, das der zu erwartende Unterschied zwischen dem im Motor 83 vorkommenden Schlupf und dem im Motor 100 vorkommenden Schlupf annähernd konstant ist, was keine wesentlichen Fehlverzüge (Verzugsschwankungen) bedeutet. Dieses überraschende Ergebnis einer näheren Betrachtung des Gesamtsystems ermöglicht den Einsatz eines Motors 100, der ähnlich dem Motor 83 kostengünstig gewählt werden kann.

Die Variante nach Fig. 7 weicht insofern von der Variante nach Fig. 6 ab, als je ein Motor 106 bzw. 108 für die Arbeitselemente der Kopfpartie 68 und der Fusspartie 70 vorgesehen ist. Jeder Motor 106, 108 des Bandablagenantriebes wird direkt vom Frequenzumrichter 84 über das Kabel 98 gespeist. Die vom Motor 108 aufzubringende Leistung ändert sich in dieser Variante in Abhängigkeit von der Kannenfüllung, was zu einer Aenderung des Schlupfunterschiedes zwischen dem Motor 106 und dem Motor 108 in der Grössenordnung von 1 bis 2% führen kann. Diese Variation im Laufe des Füllens einer Kanne ist aber nicht gravierend - sie führt bloss zu einer kleineren Aenderung in den Windungsabständen zwischen der ersten und der letzten Windung, was für die Weiterverarbeitung ohne Bedeutung ist.

Verzugsänderungen können durch Wechselräder in den Getrieben bewerkstelligt werden. In der bevorzugten Lösung ist kein Wechselrad in dem Getriebe zwischen dem Motor 83 und dem Stufenwalzenpaar 62 vorgesehen, da sonst bei einer Aenderung der Ueber- bzw. Untersetzungsverhältnisse an dieser Stelle eine entsprechende Aenderung der verzugsbestimmenden Wechselräder∗ des Motors 100 bzw. 106 durchgeführt werden muss, wenn keine Verzugsänderung vorgesehen ist.

Die Erfindung ist anwendbar, sofern die Anforderung erfüllt wird, dass das Schlupfverhalten des Antriebs für den Maschinenauslauf dem Schlupfverhalten des Bandablageantriebs gleich ist. Diese Anforderung kann auch dann erfüllt werden, wenn im Auslauf nicht alle Elemente durch einen einzigen Motor angetrieben werden. Im Normalfall wird aber der Auslauf vom Abnehmer bis zur Lieferung durch nur eine Antriebsquelle in Bewegung gesetzt werden.

## Patentansprüche

1. Die Kombination einer faserbandliefernden Maschine, insbesondere einer Karde (28), und einer dieser Maschine zugeordneten Bandablage (42), wobei die Maschine mit einem Antrieb für die bandliefernden Elemente und die Bandablage (42) mit einem eigenen Antrieb versehen sind, dadurch gekennzeichnet, dass sowohl der Antrieb für die bandliefernden Elemente der Maschine, wie auch der Antrieb für die Bandablage (42), mindestens je einen frequenzgesteuerten Drehstrommotor (83,100) umfassen, und zum Speisen dieser Motoren ein gemeinsamer Frequenzumrichter (84) vorgesehen ist.

2. Eine Kombination nach Anspruch 1, dadurch gekennzeichnet, dass die Drehstrommotoren Asynchronmotoren sind.

3. Ein Antriebssystem für eine faserbandherstellende Textilmaschine, dadurch gekennzeichnet, dass sowohl die bandliefernden Elemente wie auch die Bandablage (42) durch Motoren angetrieben werden, die eine lastabhängige Drehzahlcharakteristik aufweisen.

4. Ein System nach Anspruch 3, dadurch gekennzeichnet, dass eine Motorensteuerung (88) vorgesehen ist, die derart ausgelegt ist, dass allfälliger, im Betrieb entstehender Motorenschlupf innerhalb vorgebbarer Grenzen bleibt.

5. Ein System nach Anspruch 3 oder 4, dadurch gekennzeichnet, dass die Steuerung einen steuerbaren Leistungsteil (94) aufweist, welcher die genannten Motoren (83, 100) speist.

6. Ein System nach Anspruch 5, dadurch gekennzeichnet, dass der Leistungsteil (94) bezüglich der Frequenz der dadurch gelieferten elektrischen Energie steuerbar ist, er umfasst zum Beispiel mindestens einen Frequenzumrichter (84), und dass die genannten Motoren (83, 100) über die Speisefrequenz steuerbare Motoren sind.

7. Ein System nach Anspruch 6, dadurch gekennzeichnet, dass die Motoren Drehstromasynchronmotoren sind.

8. Ein System nach Anspruch 7, dadurch gekennzeichnet, dass die Motoren Getriebemotoren sind.

9. Eine Bandablage, dadurch gekennzeichnet, dass die Arbeitselemente in Betrieb durch mindestens einen in der Bandablage (42) vorgesehenen, über die Speisefrequenz steuerbaren Motor (100) ohne Regelkreise angetrieben sind, und dass Mittel vorgesehen sind, das Steuern dieses Motors (100) von einer ihr vorgelegten Textilmaschine aus zu ermöglichen.

10. Eine Bandablage nach Anspruch 9, dadurch gekennzeichnet, dass der Motor ein Drehstromgetriebemotor ist.

11. Eine Bandablage nach Anspruch 9 oder Anspruch 10, dadurch gekennzeichnet, dass zwei solche Motoren vorhanden sind, wovon der eine Motor die Arbeitselemente in der Kopfpartie (68) und der zweite Motor die Arbeitselemente in der Fusspartie (70) antreiben.

12. Eine Bandablage nach Anspruch 9 oder Anspruch 10, dadurch gekennzeichnet, dass nur ein solcher Motor (100) in der Bandablage vorgesehen ist, und dieser Motor alle Arbeitselemente der Bandablage direkt oder indirekt antreibt.

13. Die Kombination einer faserbandliefernden Maschine, insbesondere einer Karde (28), und einer dieser Maschine zugeordneten Bandablage (42), wobei die Maschine mit einem Antrieb für die bandliefernden Elemente und die Bandablage (42) mit einem eigenen Antrieb versehen sind, dadurch gekennzeichnet, dass sowohl der Antrieb für die bandliefernden Elemente der Maschine, wie auch der Antrieb für die Bandablage (42), mindestens je einen frequenzgesteuerten Drehstrommotor (83, 100) umfassen, und zum Speisen dieser Motoren ein Frequenzumrichterpaar vorgesehen ist, wobei die Umrichter des Paares miteinander gekoppelt sind, um die gleiche Ausgangsfrequenz bzw. Ausgangsfrequenzen in einem vorgebbaren Verhältnis vorzuweisen.

## Claims

1. The combination of a sliver-supplying machine, in particular a carding machine (28), and a sliver coiler (42) associated with said machine, with the machine being provided with a drive for the sliver-supplying elements and the sliver coiler (42) being provided with a separate drive, characterised in that both the drive for the sliver-supplying elements of the machine as well as the drive for the sliver coiler (42) each comprise at least one frequency-controlled rotary current motor (83, 100) and a common frequency converter (84) for energising said motors.

2. A combination as claimed in claim 1, characterised in that the rotary current motors are asynchronous motors.

3. A drive system for a sliver-producing textile machine, characterised in that both the sliver-supplying elements as well as the sliver coiler (42) are driven by motors which are provided with a load-controlled speed characteristic curve.

4. A system as claimed in claim 3, characterised in that a motor control unit (88) is provided which is arranged in such a way that any slip of the motors arising during operation remains within pre-determinable limits.

5. A system as claimed in claim 3 or 4, characterised in that the control unit comprises a controllable power unit (94) which energises the said motors (83, 100).

6. A system as claimed in claim 5, characterised in that the power unit (94) is controllable concerning the frequency of the thus supplied electric energy, it comprises at least one frequency converter (84) for example, and that the said motors (83, 100) are motors which are controllable by way of the energising frequency.

7. A system as claimed in claim 6, characterised in that the motors are three-phase asynchronous motors.

8. A system as claimed in claim 7, characterised in that the motors are gear motors.

9. A sliver coiler, characterised in that the working elements are driven in operation by at least one motor (100) without control loops which is provided in the sliver coiler (42) and is controllable by way of the energising frequency, and that means are provided which allow controlling said motor (100) by a textile machine which is provided upstream of the same.

10. A sliver coiler as claimed in claim 9, characterised in that the motor is a three-phase gear motor.

11. A sliver coiler as claimed in claim 9 or claim 10, characterised in that two such motors are present, whereof the one motor drives the working elements in the head section (68) and the second motor the working elements in the base section (70).

12. A sliver coiler as claimed in claim 9 or claim 10, characterised in that only one such motor (100) is provided in the sliver coiler and said motor directly or indirectly drives all working elements of the sliver coiler.

13. The combination of a sliver-supplying machine, in particular a carding machine (28), and a sliver coiler (42) associated with said machine, with the machine being provided with a drive for the sliver-supplying elements and the sliver coiler (42) being provided with a separate drive, characterised in that both the drive for the sliver-supplying elements of the machine as well as the drive for the sliver coiler (42) each comprise at least one frequency-controlled rotary current motor (83, 100) and a pair of frequency converters is provided for energising said motors, with the converters of the pair being mutually coupled in order to show the same output frequency or output frequencies in a pre-determinable ratio.

## Revendications

1. La combinaison d'une machine délivrant un ruban de fibres, particulièrement une carde (28), et d'une dépose de ruban (42) adjointe à cette machine, combinaison dans laquelle la machine est pourvue d'un entraînement pour les éléments délivrant le ruban, et la dépose de ruban (42) est pourvue de son propre entraînement,
caractérisée par le fait que,
aussi bien l'entraînement pour les éléments délivrant le ruban de la machine que l'entraînement pour la dépose de ruban (42) comprennent chacun au moins un moteur à courant alternatif triphasé (83,100) à réglage de fréquence, et un changeur de fréquence commun (84) est prévu pour l'alimentation de ces moteurs.

2. Une combinaison selon revendication 1,
caractérisée par le fait que
les moteurs à courant alternatif triphasé sont des moteurs asynchrones.

3. Un système d'entraînement pour une machine textile produisant un ruban de fibres,
caractérisé par le fait que
aussi bien les éléments délivrant le ruban que la dépose de ruban (42) sont entraînés par des moteurs qui présentent une caractéristique de rotation dépendante de la charge.

4. Un système selon revendication 3,
caractérisé par le fait
qu'un asservissement de moteur (88) est prévu et conçu de telle façon qu'un glissement de moteur, se produisant éventuellement pendant la marche, reste maintenu dans des limites pouvant être données à l'avance.

5. Un système selon revendication 3 ou 4,
caractérisé par le fait que
l'asservissement possède une partie de puissance réglable (94) qui alimente lesdits moteurs (83,100).

6. Un système selon revendication 5,
caractérisé par le fait que,
la partie de puissance (94) est réglable en ce qui concerne la fréquence de l'énergie électrique délivrée par cette partie, et comprend, par exemple, au moins un changeur de fréquence (84), et que lesdits moteurs (83,100) sont des moteurs pouvant être commandés par la fréquence d'alimentation.

7. Un système selon revendication 6,
caractérisé par le fait que
les moteurs sont des moteurs à courant alternatif triphasé asynchrones.

8. Un système selon revendication 7,
caractérisé par le fait que
les moteurs sont des moteurs réducteurs.

9. Une dépose de ruban
caractérisée par le fait que,
pendant la marche, les éléments de travail sont entraînés par au moins un moteur (100), prévu dans la dépose de ruban (42), et réglable sans circuits régulateurs, via la fréquence d'alimentation, et que des moyens sont prévus afin de permettre la commande de ce moteur (100) depuis une machine textile qui lui est disposée en amont.

10. Une dépose de ruban selon revendication 9,
caractérisée par le fait que
le moteur est un moteur réducteur à courant alternatif triphasé.

11. Une dépose de ruban selon revendication 9 ou revendication 10,
caractérisée par le fait que
deux moteurs de ce type sont présents, dont un moteur entraîne les éléments de travail dans la têtière (68), et le deuxième moteur entraîne les éléments de travail dans la partie de base (70).

12. Une dépose de ruban selon revendication 9 ou revendication 10,
caractérisée par le fait que
seul un moteur de ce type (100) est prévu dans la dépose de ruban, et ce moteur entraîne tous les éléments de travail de la dépose de ruban d'une manière directe ou indirecte.

13. La combinaison d'une machine délivrant un ruban de fibres, particulièrement une carde (28), et d'une dépose de ruban (42) adjointe à cette machine, combinaison dans laquelle la machine est pourvue d'un entraînement pour les éléments délivrant le ruban, et la dépose de ruban (42) est pourvue de son propre entraînement,
caractérisée par le fait que,
aussi bien l'entraînement pour les éléments délivrant le ruban de la machine que l'entraînement pour la dépose de ruban (42) comprennent chacun au moins un moteur à courant alternatif triphasé (83,100) à réglage de fréquence, et une paire de changeurs de fréquence est prévue pour l'alimentation de ces moteurs, et où les changeurs de la paire sont accouplés l'un avec l'autre, afin de présenter la même fréquence de sortie, respectivement les fréquences de sortie dans une relation pouvant être donnée à l'avance.
